# EUROPEAN PATENT APPLICATION

(11) **EP 2 838 233 A1**
(43) Date of publication of application: **18.02.2015**
(21) Application number: 13306154.9
(22) Date of filing: 15.08.2013
(51) Int. Cl.: H04L 25/20, H04B 3/36, H04B 3/58, H04L 25/14

(54) **Repeater, transmitter and receiver for an inter-circuit communication line**

(71) Applicant: ALCATEL LUCENT, 92100 Boulogne-Billancourt (FR)
(72) Inventor: Kozicki, Bartlomiej, 2018 Antwerp (BE); Guenach, Mamoun, 2018 Antwerp (BE); Hooghe, Koen, 2018 Antwerp (BE)
(74) Representative: Lück, Stephan

(57) **Abstract**

The present invention refers to a repeater (13) for an inter-circuit communication line (23) of an interconnect arrangement (11) adapted to connect circuits (15, 17) with each other. In order to provide an inter-circuit communication line (23) that has an increased length and/or an increased maximum bitrate and that is simple to implement it is suggested that the repeater (13) have an input (41) for receiving an input signal (x1) and an output (47) for transmitting an output signal (x2), the output signal (x2) being generated from the input signal (x1), wherein the repeater (13) includes a spectrum inverter (31) adapted to generate the output signal (x2) by inverting the spectrum of the input signal (x1).

## Description

### Field of the invention

The present invention refers to a repeater for an inter-circuit communication line of an interconnect arrangement adapted to connect circuits with each other and to a corresponding method for processing a signal. Furthermore, the present invention refers to a transmitter and a receiver for a communication line comprising such a repeater. Finally, the present invention refers to a network device, such as an access node, comprising such a communication line.

### Background

Inter-circuit communication lines are well-known in the art. In today's telecommunication equipment and computer systems such inter-circuit communication lines are implemented in the form of chip-to chip connections for interconnecting different integrated circuits located in the same telecommunication or computing device or even on the same Printed Circuit Board (PCB). Typically, at least a part of a communication line is routed along a backplane of a telecommunication equipment device. That is, at least a section of an inter-circuit communication line can be part of a backplane, a chip-to-module interconnect or a chip-to-chip interconnect.

A required bitrate between end points of such an inter-circuit communication line ranges from tens to hundreds of gigabits per second. Due to bandwidth limitations of a single electrical conductor, inter-circuit communication lines comprise typically multiple electrical conductors (channels or lanes) that are arranged to transmit data bytes or symbols in parallel in order to reach the required bitrate.

The bandwidth of a single channel of the inter-circuit communication line is determined by electrical losses (conductive losses and dielectric losses) of the individual electrical conductors. Electrical losses depend on the physical length of the communication line (e.g. the length of the PCB traces or of a twisted copper pair). As a consequence, the distance at which two elements of the telecommunication equipment device which need to communicate with each other is limited. When considering the implementation of the communication line on a PCB, further design compromises must be made because the electrical conductor cannot be realised in straight lines but rather through the meandering around other components mounted on the PCB. As interconnectors are typically implemented for a parallel data transmission over multiple channels, the area consumed by the interconnect increases more than linearly with the bitrate of the line. The area requirement of current inter-circuit communication lines therefore lead to a scalability problem in designing telecommunication equipment devices, in particular backplane systems thereof, because the size of the inter-circuit communication line should be limited in order to allow for a high bitrate on the inter-circuit communication line.

In order to be able to implement comparatively long inter-circuit communication lines despite of the limitations of the electrical conductors, it is known to use an equalizer e.g. at the transmitter and/or receiver side of the communication line. However, the performance gain attainable by equalizers is limited because perfect equalizers require infinite number of taps and higher power. Hence they typically introduce noise to the data signal transmitted over the electrical conductor.

Another known approach for increasing the length of an inter-circuit communication line is to introduce a repeater that completely regenerates the signal. Regenerating the signal comprises active retiming and optionally equalization. Such a repeater actively receives and recovers the amplitude and re-clocks the signal before sending it to the actual receiving circuit of the inter-circuit communication line. With this approach, additional space is required for the repeater and power consumption of the telecommunication equipment device is increased, which leads to an increase of the heat dissipation of the device.

### Summary

The object of the present invention is to provide an inter-circuit communication line that has an increased length and/or an increased maximum bitrate and that is simple to implement. Generally, there is a trade-off between the length of a communication line and the maximum bitrate. Accordingly, the object of the present invention can also be interpreted as to increase a bitrate length product of an inter-circuit communication line. According to an embodiment of the present invention, a repeater for an inter-circuit communication line of an interconnect arrangement adapted to connect circuits with each other is provided, wherein the repeater has an input for receiving an input signal and an output for transmitting an output signal, the output signal being generated from the input signal, wherein the repeater includes a spectrum inverter adapted to generate the output signal by inverting (full or part of) the spectrum of the input signal.

By inverting the spectrum of the signal to be transmitted over the line somewhere between the transmitter and the receiver, the signal is subject to a high attenuation of the line in high frequency ranges only along a part of the overall length of the communication line. High frequency portions of an original transmitted signal are attenuated in a section of the line between a transmitter and the repeater. The lower frequency portions of this signal are heavily attenuated only in a further section of the line between the repeater and the receiver. The spectrum inversion at a repeater has therefore the effect that the portions of the signal that are subject to a high attenuation and the portions of the signal that are subject to comparatively low attenuation are swapped at a location within the line where the repeater is installed thereby equalizing the end-to end attenuation of the signal across all frequencies of the signal.

In an embodiment, the input signal is a baseband signal and the spectrum inverter is adapted to generate the output signal as a further baseband signal. That is, the input signal is converted in another baseband signal having an inverted spectrum.

In an embodiment, the spectrum inverter comprises an up-converter for generating an intermediate signal. The up-converter is simple to implement compared to known repeater circuitry having complex signal processing means for completely regenerating the data encoded or modulated into the signal.

Preferably, the spectrum inverter comprises a down-converter for generating the output signal by converting the intermediate signal to a baseband signal, wherein at least a part of a spectrum the output signal being inverted with respect to at least a part of a spectrum the intermediate signal.

According to another embodiment of the present invention, a method for processing a signal for an inter-circuit communication line of an interconnect arrangement adapted to connect circuits with each other is provided, wherein the method comprises receiving an input signal from an input and transmitting an output signal over an output, the output signal being generated from the input signal, wherein the method includes generating the output signal by inverting the spectrum of the input signal.

In a preferred embodiment, the method is executed by a repeater according to the present invention, embodiments of which are herein described.

According to yet another embodiment of the present invention, a transmitter for an inter-circuit communication line of an interconnect arrangement adapted to connect circuits with each other is provided, wherein the transmitter comprises a splitter for splitting the input signal into sub-signals, a bandwidth of each sub-signal corresponding to a sub-band of the input signal, wherein the transmitter comprises at least one output dedicated to one of said sub-bands and adapted to output one of said sub-signals to a lane of the inter-circuit communication line.

In an embodiment, the splitter comprises at least one down-converter for converting a sub-signal into a baseband signal.

According to still another embodiment of the present invention, a receiver for receiving a signal from an inter-circuit communication line of an interconnect arrangement adapted to connect circuits with each other is provided, wherein the receiver comprises an input for receiving the signal and a spectrum inverter adapted to generate a reconstructed transmitted signal by inverting the spectrum of the received signal.

According to a further embodiment of the present invention, an inter-circuit communication line of an interconnect device arranged to connect circuits with each other is provided, wherein the inter-circuit communication line comprises a repeater, a transmitter and/or a receiver according to the invention; exemplary embodiments of the repeater, the transmitter and the receiver are herein described.

In a preferred embodiment, the repeater is located, along the communication line, at least essentially in the middle between the transmitter and the receiver. Preferably the location in the middle - herein also referred to as mid-span position - corresponds to the middle of the lane with respect on an electrical length of the line.

According to an embodiment, a network device for a communication network is provided, wherein the device comprises an inter-circuit communication line according to the invention embodiments of which are herein described.

In an embodiment, the device is an access node for an access network for interconnecting subscriber lines with further nodes of the access network, the network device comprising an interconnection arrangement, preferably a back-plane, said interconnection arrangement including the at least one inter-circuit communication line.

### Brief description of the figures

Exemplary embodiments and further advantages of the present invention are shown in the Figures and described in detail hereinafter.
- Figure 1: shows a block diagram of an interconnect arrangement comprising an inter-circuit communication line;
- Figure 2: shows a block diagram of a spectrum inverter of a repeater of the inter-circuit communication line shown in Figure 1;
- Figures 3 - 6: show diagrams of a frequency response of the inter-circuit communication line and sections thereof;
- Figures 7 - 12: show diagrams of the spectrum of signals within the spectrum inverter shown in Figure 2;
- Figures 13 - 14: illustrate how a transmitter according to an embodiment described herein may subdivide a signal into two sub-signals to be transmitted over different lanes of the inter-circuit communication line; and
- Figure 15: shows a block diagram of a transmitter for transmitting the sub-signals over different lanes.

### Description of the embodiments

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

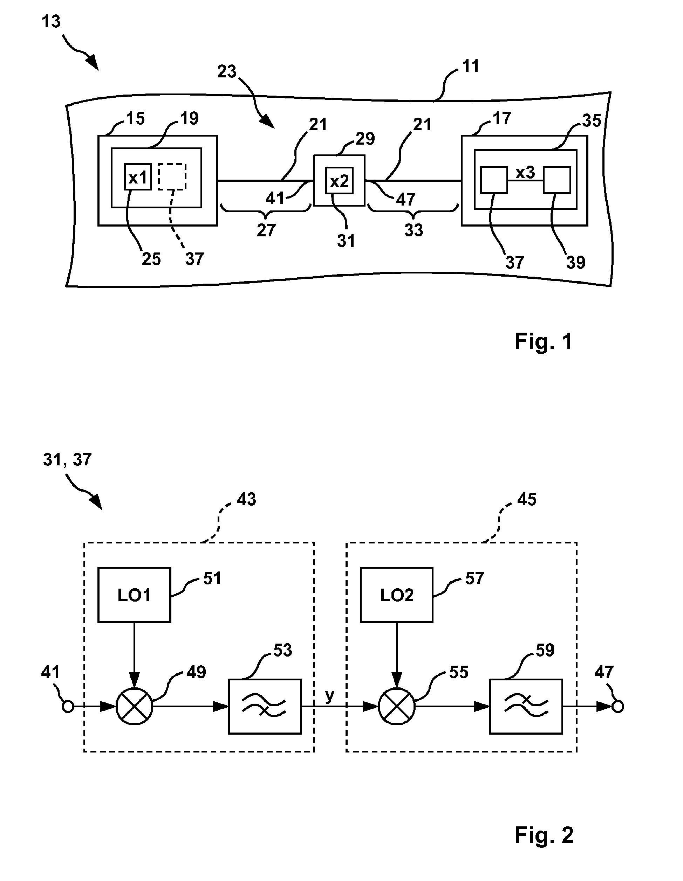

Figure 1 shows an interconnect arrangement 11 that may be part of the telecommunication equipment device 13.The device 13 may be e.g. an access node for an access network. The access node 13 may be connected to electrical and/or optical subscriber lines, which subscriber lines connect Customer Premises Equipment (CPE) of individual subscribers to the device 13 (not shown). However, the present invention is not limited to such type of devices 13. In another embodiment, the device is another type of telecommunication equipment device such as a switch or a router. Furthermore, the present invention may also be applied in connection with any type of computer systems. For instance, the interconnect arrangement 11 may connect a processor for computer with a peripheral chip or module.

The interconnect arrangement 11 is primarily intended to locally connect components like semiconductor chips or any type of modules of a single device 13 (e.g. access node, switch, router, computer, etc.) with each other. In the shown embodiment, the interconnect arrangement 11 is a printed circuit board (PCB) comprising a lane 21 formed by a single conductive trace of the PCB or a differential pair of conductive traces of the PCB 11. In another embodiment, the interconnect arrangement 11 comprises a backplane system of the device 13. In an embodiment, the interconnect arrangement 11 comprises multiple printed circuit boards that may be electrically connected with each other e.g. by means of electrical connectors.

In the shown embodiment, the interconnect arrangement 13 connects the first semiconductor chip 15 and the second semiconductor chip 17 with each other. In another embodiment, the interconnect arrangement 11 connects any other type of modules with each other. These modules may be e.g. multiple semiconductor chips mounted on a common substrate or the like.

The first chip 15 comprises a transmitter 19 for transmitting a signal x1 over the lane 21 of an inter-circuit communication line 23 of the interconnect arrangement 11. In the shown embodiment, the inter-circuit communication line 23 includes a single lane 21 only, the lane being formed as a conductive trace or a pair of conductive traces for differential signalling placed on the printed circuit board 11.

The transmitter 19 comprises a signal generator 25 for generating the signal x1. The signal generator 25 may be arranged for generating the signal from the data stream produced by other parts of the first chip 15. E.g., the signal generator 25 may include a coder and/or a modulator for generating a signal x1. The signal x1 generated by the signal generator 25 of the transmitter 19 is output to the first section 27 of the lane 21 between the transmitter 19 and the repeater 29 of the inter-connect line 23.

The repeater 29 includes a spectrum inverter 31 adapted to invert the spectrum of the signal received from the first section 27 of the lane 21. The repeater 29 is adapted to output a signal x2 generated by the spectrum inverter from the signal x1 to a second section 33 of the lane 21. The signal x2 has an inverted spectrum with respect to the spectrum of the signal x1. The second section 33 connects an output of repeater 29 and an input of a receiver 35 of the second chip 17 with each other. In the shown embodiment, the repeater 29 is located at least essentially in the middle of the lane 21. As a consequence, the sections 27, 33 have at least essentially the same electrical length. Thus, the frequency-dependent attenuation of the signals x1 and x2 is at least essentially the same on the two sections 27, 33.

The receiver 35 includes a further spectrum inverter 37, an input of which is connected to the second section 33 of the lane 21 and an output of which is connected to signal processing circuitry 39 of the receiver 35. The further spectrum inverter 37 is adapted to invert the spectrum of the signal x2 in order to obtain a signal x3 with a similar spectrum or the same spectrum as the original signal x1. The signal x3 is very similar to signal x1, i.e. there are little or no frequency dependent distortions with respect to the signal x2. However, the signal x3 is attenuated compared to signal x2, the attenuation being at least substantially frequency independent. The signal processing circuitry 39 reconstructs a bit stream included in the signal x3. Therefore, the signal processing circuitry 39 may include a decoder and/or a demodulator. The reconstructed bit stream may be made available to further parts of the second chip 17 (not shown).

Figure 2 shows the first spectrum inverter 31 in more detail. In the shown embodiment, the second spectrum inverter 37 has the same basic structure as the spectrum inverter 31 and the block diagram of Figure 2 applies to the further spectrum inverter 37 too. The spectrum inverter 31 comprises an up-converter 43 and a down-converter 45. An input 41 of the spectrum inverter 31 is connected to the up-converter 43 of the spectrum inverter 31. The input 41 corresponds to an input of the repeater 29 connected to the first section 27. An output of the up-converter 43 is connected to an input of the down-converter 45 of the spectrum inverter 31 so that the up-converter 43 forwards an intermediate signal y to the down-converter 45. An output of the down-converter 45 corresponds to an output 47 of the spectrum inverter 31.

As shown in Figure 2, the up-converter 43 includes a first mixer 49 having two inputs connected to a first local oscillator 51 and the input 41, respectively. An output of the first mixer 49 is connected to a high pass filter 53 which constitutes the last stage of the up-converter 43.

The down-converter 45 has the same basic structure as the up-converter 43. That is, the down-converter comprises a second mixer 55 having two inputs. One input of the second mixer 55 is connected to an output of the high pass filter 53. The second input of the second mixer 55 is connected to an output of the second local oscillator 57. An output of the second mixer 55 is connected to an input of a low pass filter 59, an output of which corresponds to the output 47 of the spectrum inverter 31. In the Figures, the reference sign LO1 and LO2 is used for the operating frequency of the first local oscillator 51 and the second local oscillator 57, respectively.

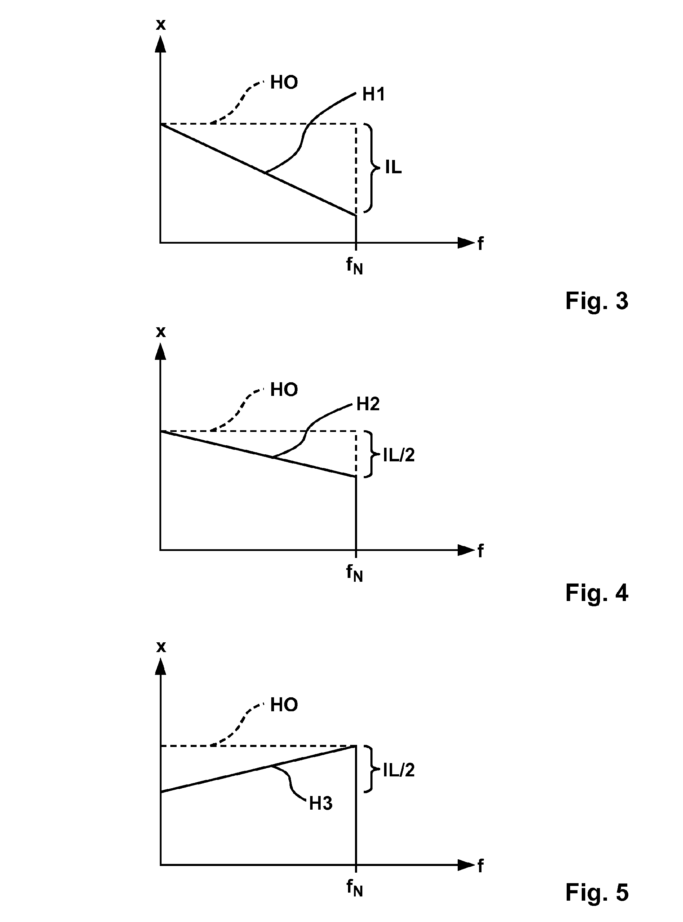

In the following, the operation of the interconnect line 23 is explained in more detail. Figure 3 shows a frequency response H0 of an ideal channel between the transmitter 19 and the receiver 35. The frequency response H0 has a rectangular shape and a bandwidth of at least the Nyquist frequency f_{N} of the signal x1. Furthermore, Figure 3 shows the frequency response H1 of a conventional inter-circuit communication line connecting the transmitter 19 and the receiver 35 directly by means of a lane 21 without using the repeater 29. It can be seen, that this direct lane 21 has a strong attenuation for high frequencies resulting in an unacceptable high bit error probability when using long inner-circuit connection lines and/or high bitrates.

However, as can be seen in Figure 4, the frequency response H2 of the first section 27 of the lane 21 is closer to the ideal frequency response H0 and higher frequencies are not so strongly attenuated. In the preferred embodiment, the repeater 29 is located in the middle between the transmitter 19 and the receiver 35. The location of the repeater 29 in the middle between the transmitter 19 and the receiver 35 is also referred to as a position within the lane of the interconnect communication lane 23 where the signal x1 has travelled an electrical equivalent of 50% of the total length of the entire electrical lane 21. Both sections of the lane 21 may include electrical traces, vias, attenuating elements, etc. As can be seen comparing the frequency responses H1 and H2 with each other, the attenuation (insertion loss IL) at the input of the repeater 29 constitutes a half of the losses of the entire link (e.g. both sections 27, 33 of the lane 21) for high frequencies.

The repeater 29 inverts the spectrum of the signal at its input (i.e. the signal x1 distorted by the first section 27 of the lane 21) according to the following rule. The frequency components residing at the Nyquist frequency f_{N} are converted to 0 Hz and the frequency components residing at 0 Hz are converted to the Nyquist frequency f_{N}, with all other frequency components resulting in symmetrical image around the half f_{N} / 2 of the Nyquist frequency f_{N}.

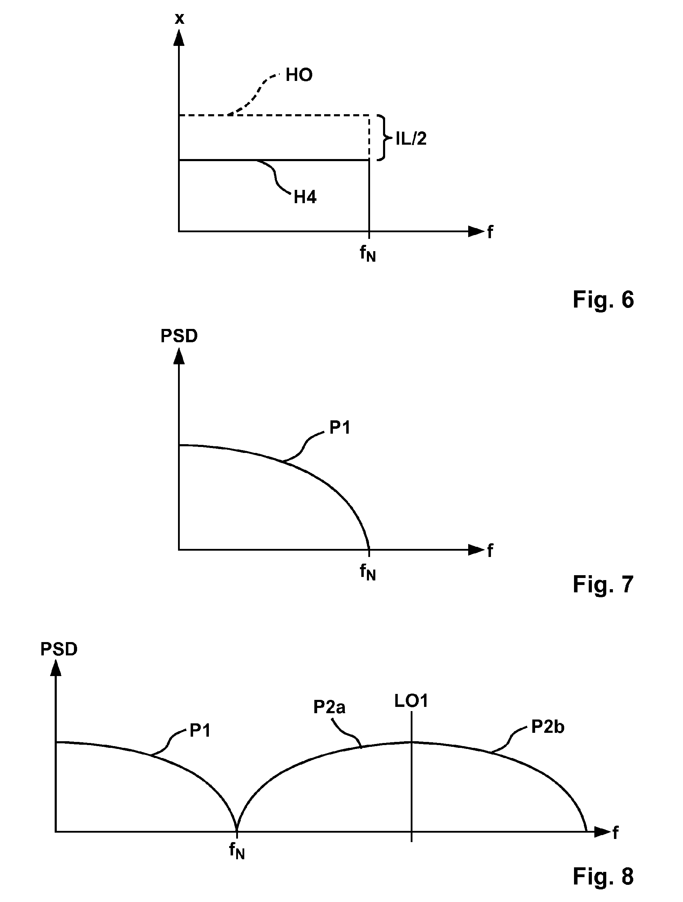

Effectively, the losses acquired up the mid-span point of the line 23 where the repeater 29 is located, are inverted in frequency, as illustrated in Figure 5, where a frequency response H3 of the lane 21 between the transmitter 19 and the output 47 of the frequency inverter 31 of the repeater 29 is depicted. The subsequent transmission between the output 47 to the receiver 35 results in the same suppression of the high frequency components, while having comparatively little impact on the signal components in the vicinity of 0 Hz. As a result, the signal x2 at the receiver 35 possesses spectral properties of the desired channel response, as shown in Figure 6 with the amplitude reduced by 50% of a maximum insertion loss IL introduced by a direct lane without repeater 29. The overall frequency response of the lane between the transmitter 19 and the receiver 35 is labelled with H4 in Figure 6.

Figure 7 to 12 illustrate the signal processing within the spectrum inverter 31, 37. In Figure 7, the power spectral density (PSD) of a signal at the input 41 of the spectrum inverter 31 is shown and labelled with P1. The signal, created e.g. by the signal generator 25 with non-retum-to-zero (NRZ) modulation with a Nyquist filter for band limiting the signal to the Nyquist frequency f_{N}, is distorted by the first section 27 of the lane 21 before it arrives at the input 41 of the spectrum inverter 31.

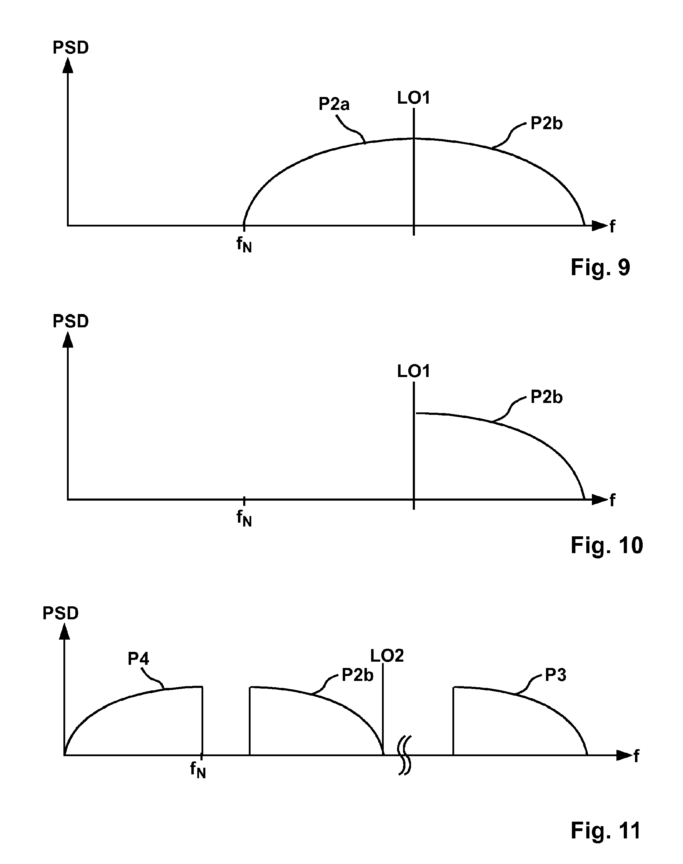

The first local oscillator 51 and the first mixer 49 up-convert the received signal P1 to a higher frequency, creating an equivalent of the signal at the higher frequency. The oscillator frequency LO1 of the first local oscillator 51 must be equal or above double the Nyquist frequency f_{N} of the original spectrum P1 to avoid aliasing. Figure 8 illustrates the spectrum at the output of the first mixer 49. This spectrum comprises besides the original spectrum P1 two side bands P2a, P2b of the up-converted version of the original signal P1. In an embodiment, a high pass filter may be provided that removes the spectrum P1 of the original signal from the signal at the output of the first mixer 49. The resulting spectrum is shown in Figure 9.

In the embodiment shown in Figure 2 this high pass filter has been omitted and the single high pass filter 53 is provided that removes all component except the opposite band P2b of the up-converted version of the original signal from the spectrum shown in Figure 8. The resulting spectrum is shown in Figure 10.

Then the down-converter 55 down-converts the spectrum P2b back to the frequency range between 0 Hz and the Nyquist frequency f_{N} using the second mixer 55 and the second local oscillator 57. The second local oscillator 57 must generate a signal having frequency LO2 equal to the sum of the frequency LO1 of the first local oscillator 51 and the Nyquist frequency,, LO2 = LO1 + f_{N}. This results in creating a spectrally inverted image P4 of the original signal P1 in the original frequency range between 0 Hz and the Nyquist frequency f_{N}.

Moreover, the low pass filter 59 of the down-converter 45 removes all frequency components P2b, P3 beyond the Nyquist frequency f_{N} from the signal at the output of the second mixer 55. In another embodiment, the repeater 29 does not comprise the low pass filter 59 and the high frequency components P2b, P3 of the signal at the output of the repeater 29 are removed by the second section 33 of the lane 21 that has a high attenuation for high frequencies anyway.

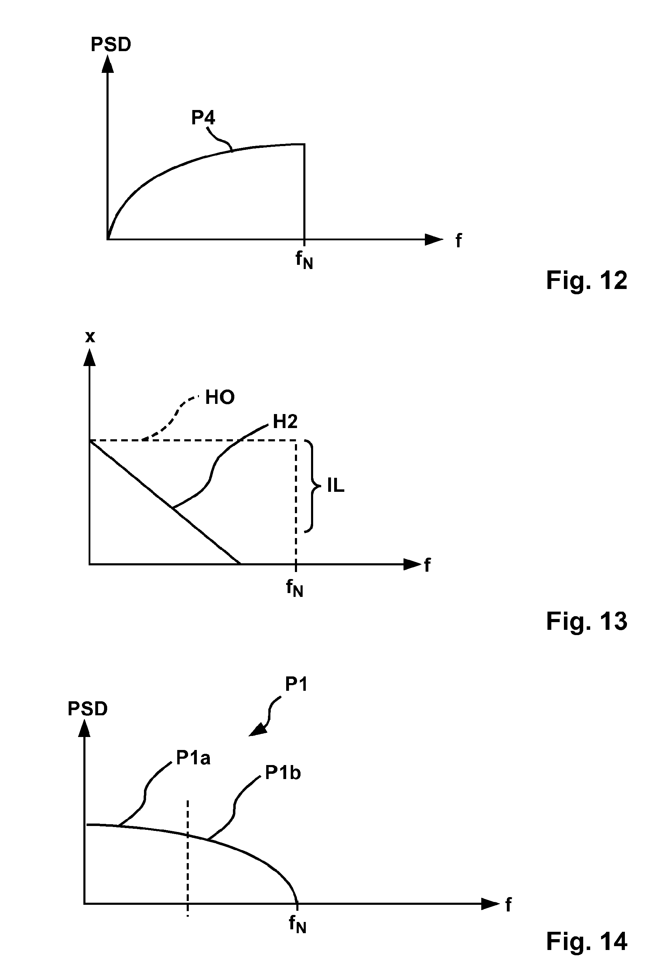

The spectrally inverted version of the original signal has the power spectral density P4. Both the components P3 and P4 are the result of mixing a signal output by the high pass filter 53 with the signal generated by the second local oscillator 57. The spectrum of the signal output by the repeater 29 and fed into the second section 33 of the lane 21 is shown in Figure 12. This spectrum includes the inverted version P4 of the original signal P1 only.

The further spectrum inverter 37 of the receiver 35 performs the same or a similar spectral inversion, leading to a recovery of the spectral contents P1 of the original signal x1 with very limited or potentially no distortion caused by the frequency-depending insertion loss of the electrical conductor of the lane 21.

In another embodiment, the further spectrum inverter 37 is located in the transmitter 19 rather than in the receiver 35 (as shown in dashed lines in Figure 1). According to this embodiment, the signal x1 on the first section 27 has an inverted spectrum and the signal x2 at the second section 33 has the original spectrum.

In yet another embodiment, the further spectrum inverter 37 is omitted and a signal having the inverted spectrum P4 is input to the signal processor 39. This signal processor 39 is adapted to process the signal having the inverted spectrum P4.

In case of a rather high bitrate length product of the inter-circuit communication line 23, the attenuation of the first section 27 or the second section 33 at high frequency may be so high that data transmission even when using the repeater 29 at the mid-span position of the lane 21 is not possible. For such scenarios, where the insertion loss of the interconnect 23 even at the mid-span location is significantly high and does not allow the recovery of high frequency components, the signal can be transmitted over multiple parallel lanes 21. A corresponding scenario is illustrated in Figure 13. The frequency response H2 of the first section 25 shows a high loss for higher frequencies below the Nyquist frequency f_{N}. The signal is almost completely attenuated for these higher frequencies.

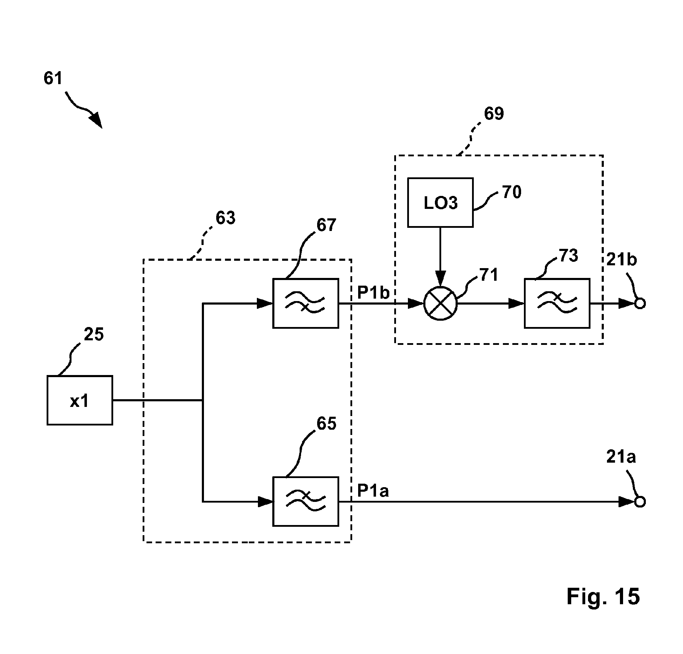

As shown in Figure 14, in an embodiment, the spectrum P1 of the original signal x1 may be split into at least two bands P1a and P1b shown in Figure 14. The two bands P1, P1b can be transmitted over separate parallel lanes 21a, 21b having equal electrical length. A block diagram of an exemplary multi-lane transmitter 61 adapted to generate signals transmitted over different lanes 2 1 a, 21 b is shown in Figure 15. The transmitter 61 comprises a splitter 63, an input of which is connected to the output of the signal generator 25. A further low pass filter 65 generates the lower frequency part P1a of the signal P1 by filtering out higher frequency. The further high pass filter 67 removes the lower frequencies of the signal P1 and passes the higher frequency part P1b to a further down converter 69. The down converter 69 converts the portion P1b of the original signal to a base band signal that is transmitted over lane 21b. The lower frequency portion P1a is transmitted over the second lane 21a.

As shown in Figure 15, the further down-converter 69 has a further local oscillator 70 for generating a signal having a frequency LO3, and mixer 71 for mixing the signal generated by the further local oscillator 69 with the signal P1b output by the splitter 63 and a low pass filter 73 for removing unwanted higher frequency parts from the signal generated by the mixer 71. The two lanes 21a, 21b have the same structure as the lane shown in Figure 1. In particular the lanes 21a, 21b may comprise the repeater 29 in their respective mid-span location. The receiver for the multi-lane inter-circuit connection line 23 may comprise multiple spectrum inverters 31, each of them connected to a different lane 21a, 21b. The signal processing circuitry 39 may be connected to the outputs of the individual spectrum inverters 31. As in the embodiment described above in connection with a single lane interconnect 23, in the embodiment comprising multiple lanes 21a, 21b, the further spectrum inverter 37 may also be placed at the transmitter 19, with each lane 21a, 21b having a dedicated further spectrum inverter 37. Moreover, the further spectrum inverter 37 may be omitted and replaced by signal processing in the signal processing circuitry 39.

In Figure 15, an exemplary embodiment having two separate lanes 21a, 21b is shown. However, this embodiment may easily be extended to multi-lane inter-circuit communication lanes 23 having more than two lanes 21. In such embodiments, the splitter 63 needs to be extended so that it can output more than two sub-signals and more than one further down-converter 69 needs to be provided.

In yet another embodiment, power spectral density of the signal may be split up according to channel loss per lane 21. For instance, if the lanes 21 differ with respect to their frequency-dependent attenuation and/or have different total bandwidths, the power spectral power density may be split in an asymmetrical way. That is, more signal bandwidth may be allocated to one lane 21a and less bandwidth may be allocated to another lane 21b. This can be implemented by appropriately dimensioning the splitter 63. At the receiver 33 the two or more sub-signals may be merged by means of superposition and appropriate scaling.

To sum up, the inter-circuit communication line 23 described herein comprises rather simple repeater 29 located at least approximately in the middle between the transmitter 19 and the receiver 35, which repeater 29 inverts the spectrum of a signal transmitted over one or more lanes 21 of the inter-circuit communication line 23. By inverting the spectrum, the signal can be rather evenly equalized and the maximum bit rate and/or the maximum length of the inter-circuit communication line 23 can be increased in a cost efficient way. The repeater 29 has a simple structure compared to known repeater concepts and equalization approaches and therefore allows implementing inter-circuit communication lines 23 that have little power consumption and therefore little heat dissipation. As a consequence, inexpensive telecommunication equipment devices 13 may be provided that have a compact size.

## Claims

1. Repeater (29) for an inter-circuit communication line (23) of an interconnect arrangement (11) adapted to connect circuits (15, 17) with each other, wherein the repeater (13) has an input (41) for receiving an input signal (x1) and an output (47) for transmitting an output signal (x2), the output signal (x2) being generated from the input signal (x1), wherein the repeater (13) includes a spectrum inverter (31) adapted to generate the output signal (x2) by inverting at least a part of a spectrum of the input signal (x1).

2. Repeater (29) according to claim 1, wherein the input signal is a baseband signal (x1) and the spectrum inverter (31) is adapted to generate the output signal as a further baseband signal (x2).

3. Repeater (29) according to claim 1 or 2, wherein the spectrum inverter (31) comprises an up-converter (43) for generating an intermediate signal (y).

4. Repeater (29) according to claim 3, wherein the spectrum inverter (31) comprises a down-converter (45) for generating the output signal (x2) by converting the intermediate signal (y) to a baseband signal (x2), wherein at least a part (P4) of a spectrum the output signal (x2) being inverted with respect to at least a part (P2b) of a spectrum the intermediate signal (y).

5. Method for processing a signal (x1) for an inter-circuit communication line (23) of an interconnect arrangement (11) adapted to connect circuits (15, 17) with each other, wherein the method comprises receiving an input signal from an input (41) and transmitting an output signal (x2) over an output (47), the output signal (x2) being generated from the input signal (x1), wherein the method includes generating the output signal by inverting (31) at least a part of a spectrum of the input signal.

6. Method according to claim 5, wherein the method is executed by a repeater (29) according to one of claim 1 to 4.

7. Transmitter (15, 61) for an inter-circuit communication line (23) of an interconnect arrangement (11) adapted to connect circuits (15, 17) with each other, wherein the transmitter (19) comprises a splitter (63) for splitting the input signal (x1) into sub-signals (P1a, P1b), a bandwidth of each sub-signal (P1a, P1b) corresponding to a sub-band of the input signal (x1), wherein the transmitter (19) comprises at least one output dedicated to one of said sub-bands and adapted to output one of said sub-signals (P1a, P1b) to a lane (21 a, 21 b) of the inter-circuit communication line (23).

8. Transmitter (15,61) according to claim 7, wherein the splitter (63) comprises at least one down-converter (69) for converting a sub-signal into a baseband signal.

9. Receiver (35), for receiving a signal (x2) from an inter-circuit communication line (23) of an interconnect arrangement (11) adapted to connect circuits (15, 17) with each other, wherein the receiver (17) comprises an input for receiving the signal (x2) and a spectrum inverter (37) adapted to generate a reconstructed transmitted signal (x3) by inverting the spectrum of the received signal (x2).

10. Inter-circuit communication line (23) of an interconnect device (11) arranged to connect circuits (15, 17) with each other, wherein the inter-circuit communication line (23) comprises a repeater (29) according to one of claims 1 to 4, a transmitter (19) according to claim 7 or 8 and/or a receiver (35) according to claim 9.

11. Communication line (23) according to claim 10, wherein the repeater (29) is located, along the communication line (23), at least essentially in the middle between the transmitter (19) and the receiver (35).

12. Network device (13) for a communication network, wherein the device comprise an inter-circuit communication line (23) according to claim 10 or 11.

13. Device (13) according to claim 12, wherein the device (13) is an access node for an access network for interconnecting subscriber lines with further nodes of the access network, the network device comprising an interconnection arrangement, preferably a back-plane (11), said interconnection arrangement including the at least one inter-circuit communication line (23).
